# EUROPÄISCHE PATENTSCHRIFT

(11) **EP 2 698 559 B1**
(45) Veröffentlichungstag und Bekanntmachung des Hinweises auf die Patenterteilung: **27.05.2015**
(21) Anmeldenummer: 12005878.9
(22) Anmeldetag: 14.08.2012
(51) Int. Cl.: F16F 13/26

(54) **Hydrolager**
Hydraulic support
Couche hydraulique

(43) Veröffentlichungstag der Anmeldung: 19.02.2014
(73) Patentinhaber: TrelleborgVibracoustic GmbH, 64293 Darmstadt (DE)
(72) Erfinder: Eckel, Hans-Gerd, 69514 Laudenbach (DE)
(74) Vertreter: Flügel Preissner Kastel Schober

(56) Entgegenhaltungen:
- DE-A1- 3 419 437
- DE-A1- 3 933 248
- DE-C1- 4 330 560
- JP-A- 60 155 027
- US-A- 5 116 029

## Beschreibung

### Technisches Gebiet

Die Erfindung betrifft ein Hydrolager, umfassend ein Traglager und ein Auflager, die durch einen im Wesentlichen hohlkegelförmig ausgebildeten Federkörper aus gummielastischem Werkstoff elastisch nachgiebig aufeinander abgestützt sind und einen Arbeitsraum und einen Ausgleichsraum, die axial in Richtung der betriebsbedingt eingeleiteten Schwingungen benachbart zueinander angeordnet und jeweils mit Dämpfungsflüssigkeit gefüllt sind und auf ihren axial einander zugewandten Seiten durch eine gemeinsame Trennwand räumlich voneinander getrennt und durch einen in der Trennwand angeordneten Dämpfungskanal flüssigkeitsleitend miteinander verbunden sind und einen Tilgerkanal, der durch eine Stelleinrichtung schaltbar ist.

### Stand der Technik

Ein solches Hydrolager ist aus der DE 43 30 560 C1 bekannt. Die Stelleinrichtung ist durch ein Druckmittel beaufschlagbares Stellglied gebildet, und die Durchtrittsöffnung hat einen sich in radialer Richtung erstreckenden, mäanderförmigen Querschnitt. Durch das vorbekannte Hydrolager stellt sich insbesondere im Leerlauf einer mittels des Hydrolagers gelagerten Maschine eine deutlich abgesenkte wirksame Lagersteifigkeit ein. Durch die geringe Lagersteifigkeit werden störende Motorvibrationen im Leerlauf ausgezeichnet isoliert.
Das vorbekannte Hydrolager kann jedoch nur dann zur Anwendung gelangen, wenn ein ausreichend großer Differenzdruck zur Betätigung des Stellglieds der Stelleinrichtung vorhanden ist

### Darstellung der Erfindung

Der Erfindung liegt die Aufgabe zugrunde, ein Lager der vorbekannten Art derart weiter zu entwickeln, dass es auch dann zur Anwendung gelangen kann, wenn Differenzdruck für die Betätigung der Stelleinrichtung nicht oder nicht in ausreichendem Maße zur Verfügung steht, das Hydrolager aber dennoch schaltbar sein und im Wesentlichen die gleichen vorteilhaften Gebrauchseigenschaften aufweisen soll.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die Stelleinrichtung innerhalb einer Ausnehmung eines Traglagers angeordnet ist und einen elektrisch ansteuerbaren Elektromagnet und einen axial in Richtung der eingeleiteten Schwingungen schwingfähigen Anker aus ferromagnetischem Werkstoff umfasst, der durch den Elektromagnet relativ zu diesem bewegbar und zur funktionstechnischen Abkopplung des Tilgerkanals vom Arbeitsraum flüssigkeitsdicht an das Traglager anlegbar ist
In modernen Kraftfahrzeugen, insbesondere in Kraftfahrzeugen mit Hybrid - oder Elektroantrieben, ist häufig nicht ohne weiteres ein ausreichend großer Differenzdruck zur Betätigung pneumatischer Stelleinrichtungen verfügbar. Um die Stelleinrichtung von Hydrolagern trotzdem einfach und kostengünstig betätigen zu können, ist erfindungsgemäß der elektrisch ansteuerbare Elektromagnet vorgesehen.
Läuft die gelagerte Maschine im Leerlauf, wird ein Tilgereffekt dadurch erreicht, dass der Anker mit seiner Masse gegen die axiale Feder der ersten Membran relativ schwingfähig innerhalb des Hydrolagers angeordnet ist. Dieser Tilgereffekt führt zu einer Absenkung der dynamischen Federrate des Hydrolagers. Der Tilgerkanal und der Arbeitsraum sind strömungsleitend verbunden Der schwingfähige Anker bewirkt bei Motorleerlauf eine deutlich kleinere wirksame Lagersteifigkeit und damit eine verbesserte Isolation von störenden Motorvibrationen.
Wird der Motor demgegenüber oberhalb seiner Leerlaufdrehzahl betrieben, ist der Anker am Elektromagnet in seiner Position arretiert, das heißt, nicht mehr relativ schwingfähig innerhalb des Hydrolagers angeordnet. Eine strömungsleitende Verbindung zwischen den Tilgerkanal und dem Arbeitsraum besteht nicht
In diesem Betriebszustand weist das Hydrolager Gebrauchseigenschaften auf, die im Wesentlichen den Gebrauchseigenschaften von nicht-schaltbaren Hydrolagern entsprechen.

Bei dem erfindungsgemäßen Hydrolager ist von Vorteil, dass dieses besonders axial in Richtung der betriebsbedingt eingeleiteten Schwingungen kompakte Abmessungen aufweist. Die Stelleinrichtung, die den Elektromagnet und den Anker umfasst, ist Platz sparend in der Ausnehmung des Traglagers angeordnet und außenumfangsseitig von dem Traglager umschlossen.

Der Elektromagnet kann durch einen Gleichstrom ansteuerbar sein. Dadurch wird eine Schaltfunktion "ein / aus" ermöglicht.

Der Elektromagnet kann demgegenüber durch einen Wechselstrom ansteuerbar sein. Dadurch kann ein Schwinger aus einem ferromagnetischen Werkstoff angetrieben wird.

Der Gleichstrom kann von einem Wechselstrom überlagerbar sein. Der angetriebene Schwinger ist in einem solchen Fall als Permanentmagnet ausgebildet.

Der Anker und das Traglager können durch eine rollbalgförmig ausgebildete und sich axial erstreckende erste Membran aus einem gummielastischen Werkstoff relativ schwingfähig miteinander verbunden sein, wobei die erste Membran stimseitig einerseits mit dem Traglager und stimseitig andererseits mit dem Anker flüssigkeitsdicht verbunden ist. Die erste Membran begrenzt dadurch den Tilgerkanal auf der dem Arbeitsraum abgewandten Seite. Dämpfungsflüssigkeit befindet sich nur auf der dem Arbeitsraum zugewandten Seite der ersten Membran; der Elektromagnet, der auf der dem Arbeitsraum abgewandten Seite der ersten Membran angeordnet ist, wird dadurch zuverlässig vor einer Beaufschlagung mit Dämpfungsflüssigkeit geschützt.

Die erste Membran ist bevorzugt als federnde Aufhängung des Ankers und außerdem als Dichtung des Arbeitsraums und des Tilgerkanals gegenüber dem Elektromagnet ausgebildet. Bei nicht-bestromtem Elektromagnet, also dann, wenn der Anker zum Elektromagnet beabstandet und schwingfähig angeordnet ist, wobei der Tilgerkanal und der Arbeitsraum strömungsleitend verbunden sind, wird der Anker lediglich durch die erste Membran in seiner schwingfähigen Position gehalten.

Der nicht-bestromte Elektromagnet und der Anker sind einander mit axialem Abstand benachbart zugeordnet, wobei der axiale Abstand größer als die betriebsbedingte Amplitude des schwingfähigen Ankers ist. Dadurch wird erreicht, dass der Anker auch dann, wenn er bei nicht-bestromtem Elektromagnet Leerlaufvibrationen eines Motors isoliert, nicht unerwünscht an den Elektromagnet selbst oder an das Traglager anschlägt.

Der Anker kann den bestromten Elektromagnet anliegend berühren. Bei dem zuvor beschriebenen Hydrolager ist es so, dass der Tilgerkanal bei nicht-bestromtem Elektromagnet mit dem Arbeitsraum in einer Wirkverbindung steht.

Generell besteht jedoch auch die Möglichkeit, dass der Tilgerkanal bei nicht-bestromtem Elektromagnet von dem Arbeitsraum funktionstechnisch abgekoppelt ist und sich das erfindungsgemäße Hydrolager dann wie ein Hydrolager ohne schaltbaren Tilgerkanal verhält.
Für diesen Fall bietet sich innerhalb der Spule des Magneten ein Permanentmagnet an, der bei nicht bestromter Spule des Magneten ein Anziehen des Ankers bewirkt. Ist Tilgerfunktion z.B. bei Motarleerlauf erwünscht, ist das Bestromen der Spule so zu wählen, dass die anziehende Wirkung des Permanenrmagneten kompensiert wird.
Im Hinblick auf ein in jedem Fall unproblematisches Fail-Safe-Verhalten kann das von Vorteil sein.

Der Elektromagnet kann auf der der Trennwand axial abgewandten Seite des Ankers angeordnet sein. Durch die erste Membran ist der Einbauraum des Elektromagnets wirkungsvoll gegenüber dem Tilgerkanal und der darin befindlichen Dämpfungsflüssigkeit abgedichtet.

Der Elektromagnet kann mittels einer das Traglager durchdringenden elektrischen Leitung ansteuerbar sein. Hierbei ist von Vorteil, dass der Elektromagnet im Traglager ortsfest angeordnet ist und dass deshalb zwischen diesen beiden Teilen keine Relativbewegung erfolgt, die von der elektrischen Leitung mitgemacht werden müsste. Für gute Gebrauchseigenschaften des Hydrolagers während einer langen Gebrauchsdauer ist das von Vorteil.

Die Trennwand zwischen dem Arbeitsraum und dem Ausgleichsraum kann bevorzugt als Düsenkäfig ausgebildet sein und zwei axial benachbart zueinander angeordnete Düsenscheiben umfassen, zwischen denen eine axial in Richtung der eingeleiteten Schwingungen schwingfähige zweite Membran aus einem gummielastischem Werkstoff angeordnet ist. Ein solcher Düsenkäfig zwischen Arbeitsraum und Ausgleichsraum gelangt zur Isolierung höherfrequenter, kleinamplitudiger Schwingungen zur Anwendung. Schwingungen, die zum Beispiel durch Motorvibrationen in das Hydrolager eingeleitet werden, werden dadurch isoliert, dass die innerhalb des Hydrolagers befindliche Dämpfungsflüssigkeit durch die Düsenscheiben hindurch auf die schwingfähige zweite Membran wirkt. Durch die Schwingungen der zweiten Membran werden die höherfrequenten, kleinamplitudigen Schwingungen isoliert.

### Ausführung der Erfindung

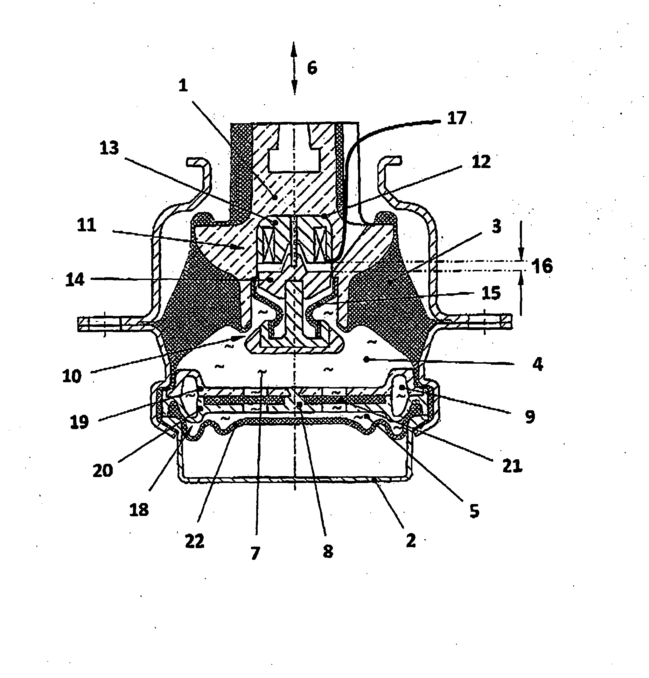

Ein Ausführungsbeispiel des erfindungsgemäßen Hydrolagers wird nachfolgend anhand der Figur näher beschrieben.

In der schematisch dargestellten Figur ist ein Hydrolager gezeigt, das sich von einem konventionellen, nicht-schaltbaren Hydrolager durch die Stelleinrichtung 11 unterscheidet.

Das Hydrolager umfasst ein Traglager 1 und ein Auflager 2, die durch den hohlkegelförmig ausgebildeten Federkörper 3, der aus einem gummielastischen Werkstoff besteht, elastisch nachgiebig auf einander abgestützt sind. Axial in Richtung der betriebsbedingt eingeleiteten Schwingungen 6 ist zwischen dem Arbeitsraum 4 und dem Ausgleichsraum 5 die Trennwand 8 angeordnet, in der zur Dämpfung tieffrequenter, großamplitudiger Schwingungen der Dämpfungskanal 9 angeordnet ist. Zur Isolierung kleinamplitudiger, höherfrequenter Schwingungen sind die Düsenscheiben 19, 20 und die zweite Membran 21, die ebenfalls aus einem gummielastischen Werkstoff besteht, vorgesehen.

Der Ausgleichsraum 5 ist auf seiner der Trennwand 8 axial abgewandten Seite durch eine rollbalgförmig ausgebildete Abschlussmembran 22 aus gummielastischem Werkstoff begrenzt, die aus dem Arbeitsraum 4 in den Ausgleichsraum 5 verdrängte Dämpfungsflüssigkeit 7 im Wesentlichen drucklos aufnimmt.

Kleinamplitudige, höherfrequente Schwingungen werden durch die zweite Membran 21, die schwingfähig zwischen den beiden Düsenscheiben 19, 20 angeordnet ist, isoliert.

Tieffrequente, großamplitudige Schwingungen werden durch eine Verlagerung der Dämpfungsflüssigkeit 7 vom Arbeitsraum 4 durch die Dämpfungskanal 9 in den Ausgleichsraum 5 und wieder zurück gedämpft.
Die zuvor geschilderte Isolierung sowie die Dämpfung betriebsbedingt eingeleiteter Schwingungen erfolgt bei Drehzahlen eines auf dem Hydrolager abgestützten Motors oberhalb von dessen Leerlaufdrehzahl.
Im Leerlauf des abgestützten Motors entstehen Motorvibrationen, die nur durch die zweite Membran 21 nur unzureichend isoliert werden könnten.
Zur Isolierung dieser Motorvibrationen im Leerlauf sind der schaltbare Tilgerkanal 10 und die Stelleinrichtung 11 vorgesehen. Die Stelleinrichtung 11 ist durch den elektrisch ansteuerbaren Elektromagnet 13 und den schwingfähigen Anker 14 gebildet, der aus einem ferromagnetischen Werkstoff besteht. Dargestellt ist das Hydrolager mit nicht-angesteuertem Elektromagnet 13. Der Anker 14 ist dem Elektromagnet 13 mit dem axialen Abstand 16 benachbart zugeordnet, wobei dieser axiale Abstand 16 derart bemessen ist, dass ein ausreichend großer Strömungsquerschnitt für eine Bewegung der Dämpfungsflüssigkeit 7 zwischen dem Tilgerkanal 10 und dem Arbeitsraum 4 gewährleistet ist.
Der Anker 14 hat die Funktion eines Ventils, das Traglager 1 die Funktion eines Ventilsitzes. Bei bestromtem Elektromagnet 13 wird der Anker 14 in axialer Richtung an den Elektromagnet 13 gezogen und anschließend an diesen gehalten. Dabei ist der Tilgerkanal 10 vom Arbeitsraum 4 flüssigkeitsdicht getrennt, das heißt funktionstechnisch abgekoppelt.

Verbunden sind der Anker 14 und das Traglager 1 in dem hier gezeigten Ausführungsbeispiel ausschließlich durch die rollbalgförmig ausgebildete erste Membran 15, die aus einem gummielastischen Werkstoff besteht und einerseits flüssigkeitsdicht mit dem Anker 14 und andererseits flüssigkeitsdicht mit dem Traglager 1 verbunden ist.

## Patentansprüche

1. Hydrolager, umfassend ein Traglager (1) und ein Auflager (2), die durch einen im Wesentlichen hohlkegelförmig ausgebildeten Federkörper (3) aus gummielastischem Werkstoff elastisch nachgiebig aufeinander abgestützt sind und einen Arbeitsraum (4) und einen Ausgleichsraum (5), die axial in Richtung der betriebsbedingt eingeleiteten Schwingungen (6) benachbart zueinander angeordnet und jeweils mit Dämpfungsflüssigkeit (7) gefüllt sind und auf ihren axial einander zugewandten Seiten durch eine gemeinsame Trennwand (8) räumlich voneinander getrennt und durch einen in der Trennwand (8) angeordneten Dämpfungskanal (9) flüssigkeitsleitend miteinander verbunden sind und einen Tilgerkanal (10), der durch eine Stelleinrichtung (11) schaltbar ist, **dadurch gekennzeichnet, dass** die Stelleinrichtung (11) innerhalb einer Ausnehmung (12) des Traglagers (1) angeordnet ist und einen elektrisch ansteuerbaren Elektromagnet (13) und einen axial in Richtung der eingeleiteten Schwingungen (6) schwingfähigen Anker (14) aus ferromagnetischem Werkstoff umfasst, der durch den Elektromagnet (13) relativ zu diesem bewegbar und zur funktionstechnischen Abkopplung des Tilgerkanals (10) vom Arbeitsraum (4) flüssigkeitsdicht an das Traglager (1) anlegbar ist.

2. Hydrolager nach Anspruch 1, **dadurch gekennzeichnet, dass** der Elektromagnet (13) durch einen Gleichstrom ansteuerbar ist.

3. Hydrolager nach Anspruch 1, **dadurch gekennzeichnet, dass** der Elektromagnet (13) durch einen Wechselstrom ansteuerbar ist.

4. Hydrolager nach einem der Ansprüche 2 oder 3, **dadurch gekennzeichnet, dass** der Gleichstrom von einem Wechselstrom überlagerbar ist.

5. Hydrolager nach einem der Ansprüche 1 bis 4, **dadurch gekennzeichnet, dass** der Anker (14) und das Traglager (1) durch eine rollbalgförmig ausgebildete und sich axial erstreckende erste Membran (15) aus einem gummielastischen Werkstoff relativ schwingfähig miteinander verbunden sind und dass die erste Membran (15) stimseitig einerseits mit dem Traglager (1) und stimseitig andererseits mit dem Anker (14) flüssigkeitsdicht verbunden ist.

6. Hydrolager nach Anspruch 5, **dadurch gekennzeichnet, dass** die erste Membran (15) als federnde Aufhängung des Ankers (14) und außerdem als Dichtung des Arbeitsraums (4) und des Tilgerkanals (10) gegenüber dem Elektromagnet (13) ausgebildet ist.

7. Hydrolager nach einem der Ansprüche 1 bis 6, **dadurch gekennzeichnet, dass** der nicht-angesteuerte Elektromagnet (13) und der Anker (14) einander mit axialem Abstand (16) benachbart zugeordnet sind, wobei der axiale Abstand (16) größer als die betriebsbedingte Amplitude des schwingfähigen Ankers (14) ist.

8. Hydrolager nach einem der Ansprüche 1 bis 7, **dadurch gekennzeichnet, dass** der Anker (14) den angesteuerten Elektromagnet (13) anliegend berührt.

9. Hydrolager nach einem der Ansprüche 1 bis 8, **dadurch gekennzeichnet, dass** der Elektromagnet (13) auf der der Trennwand (8) axial abgewandten Seite des Ankers (14) angeordnet ist.

10. Hydrolager nach einem der Ansprüche 1 bis 9, **dadurch gekennzeichnet, dass** der Elektromagnet (13) mittels einer das Traglager (1) durchdringenden elektrischen Leitung (17) ansteuerbar ist.

11. Hydrolager nach Anspruch 5, **dadurch gekennzeichnet, dass** die Trennwand (8) als Düsenkäfig (18) ausgebildet ist und zwei axial benachbart zueinander angeordnete Düsenscheiben (19, 20) umfasst, zwischen denen eine axial in Richtung der eingeleiteten Schwingungen (6) schwingfähige zweite Membran (21) aus einem gummielastischen Werkstoff angeordnet ist.

## Claims

1. A hydromount, comprising a carrying mount (1) and a support mount (2), which are supported on each other in an elastically yielding manner by a resilient body (3) of rubber-elastic material, which is configured substantially in a hollow-cone shape, and a working chamber (4) and an equalisation chamber (5), which are disposed axially adjacent to each other in the direction of the operationally introduced vibrations (6) and are each filled with damping liquid (7) and are spatially separated from each other on their axially facing sides by a common partition wall (8) and are connected to each other in a liquid-conducting manner by a damping channel (9) disposed in the partition wall (8), and an absorber channel (10), which can be switched by means of an actuating device (11), **characterised in that** the actuating device (11) is disposed within a recess (12) of the carrying mount (1) and comprises an electrically drivable electromagnet (13) and an armature (14) of ferromagnetic material, which is capable of vibrating axially in the direction of the introduced vibrations (6) and which, by means of the electromagnet (13), is movable relative thereto, and which can be made to rest against the carrying mount (1) in a liquid-tight manner for functionally decoupling the absorber channel (10) from the working chamber (4).

2. The hydromount according to claim 1, **characterised in that** the electromagnet (13) is drivable by means of a direct current.

3. The hydromount according to claim 1, **characterised in that** the electromagnet (13) is drivable by means of an alternating current.

4. The hydromount according to any one of the claims 2 or 3, **characterised in that** the direct current can be superposed by an alternating current.

5. The hydromount according to any one of the claims 1 to 4, **characterised in that** the armature (14) and the carrying mount (1) are connected to each other in a relatively vibration-capable manner by means of a first membrane (15) of a rubber-elastic material, which is configured in the shape of a rolling bellows and extends axially, and that the first membrane (15) is connected on its one end face to the carrying mount (1) and on the other end face in a liquid-tight manner to the armature (14).

6. The hydromount according to claim 5, **characterised in that** the first membrane (15) is configured as a resilient suspension of the armature (14) and also as a seal of the working chamber (4) and of the absorber channel (10) with respect to the electromagnet (13).

7. The hydromount according to any one of the claims 1 to 6, **characterised in that** the non-driven electromagnet (13) and the armature (14) are adjacent to each other with an axial spacing (16) and associated with each other, the axial spacing (16) being greater than the operational amplitude of the vibration-capable armature (14).

8. The hydromount according to any one of the claims 1 to 7, **characterised in that** the armature (14) touches the driven electromagnet (13), resting thereon.

9. The hydromount according to any one of the claims 1 to 8, **characterised in that** the electromagnet (13) is disposed on the side of the armature (14) axially facing away from the partition wall (8).

10. The hydromount according to any one of the claims 1 to 9, **characterised in that** the electromagnet (13) can be driven by means of an electric line (17) penetrating the carrying mount (1).

11. The hydromount according to claim 5, **characterised in that** the partition wall (8) is configured as an orifice cage (18) and comprises two orifice discs (19, 20) disposed adjacent to each other, between which a second membrane (21) of a rubber-elastic material, which is capable of vibrating axially in the direction of the introduced vibrations (8), is disposed.

## Revendications

1. Support hydraulique, comprenant une partie portante (1) et une partie d'appui (2) qui sont soutenues l'une sur l'autre de manière élastiquement flexible au moyen d'un corps-ressort (3) en matériau présentant l'élasticité du caoutchouc et réalisé sensiblement en forme de cône creux, et comportant une chambre de travail (4) et une chambre d'égalisation (5), lesquelles sont agencées au voisinage l'une de l'autre axialement en direction des oscillations (6) imposées pour des raisons de fonctionnement et sont remplies respectivement d'un liquide amortisseur (7), et lesquelles sont séparées l'une de l'autre dans l'espace sur leurs côtés orientés axialement l'un vers l'autre par une cloison de séparation commune (8) et sont reliées l'une à l'autre de manière fluidique par un canal d'amortissement (9) agencé dans la cloison de séparation (8), et comportant un canal de compensation (10), susceptible d'être commuté par un système de positionnement (11), **caractérisé en ce que** le système de positionnement (11) est agencé à l'intérieur d'un évidement (12) de la partie portante (1) et inclut un électroaimant (13) à pilotage électrique et un induit (14) en matériau ferromagnétique, capable d'osciller axialement en direction des oscillations imposées (6), qui est déplaçable au moyen de l'électroaimant (13) par rapport à celui-ci et qui peut être appliqué contre la partie portante (1) de manière étanche aux fluides pour le découplage fonctionnel du canal de compensation (10) vis-à-vis de la chambre de travail (4).

2. Support hydraulique selon la revendication 1, **caractérisé en ce que** l'électroaimant (13) est susceptible d'être piloté par un courant continu.

3. Support hydraulique selon la revendication 1, **caractérisé en ce que** l'électroaimant (13) est susceptible d'être piloté par un courant alternatif.

4. Support hydraulique selon l'une des revendications 2 ou 3, **caractérisé en ce que** le courant continu est susceptible d'être superposé par un courant alternatif.

5. Support hydraulique selon l'une des revendications 1 à 4, **caractérisé en ce que** l'induit (14) et la partie portante (1) sont reliés l'un à l'autre de manière à pouvoir osciller l'un par rapport à l'autre au moyen d'une première membrane (15) en matériau présentant l'élasticité du caoutchouc, réalisée en forme de soufflet déroulant et s'étendant axialement, et **en ce que** la première membrane (15) est reliée du côté frontal d'une part à la partie portante (1) et du côté frontal d'autre part à l'induit (14), de manière étanche aux fluides.

6. Support hydraulique selon la revendication 5, **caractérisé en ce que** la première membrane (15) est réalisé à titre de suspension à effet ressort de l'induit (14) et d'autre part à titre d'étanchement de la chambre de travail (4) et du canal de compensation (10) par rapport à l'électroaimant (13).

7. Support hydraulique selon l'une des revendications 1 à 6, **caractérisé en ce que** l'électroaimant (13) qui n'est pas piloté et l'induit (14) sont agencés au voisinage l'un de l'autre avec une distance axiale (16), ladite distance axiale (16) étant plus grande que l'amplitude de l'induit (14) capable d'osciller en fonctionnement.

8. Support hydraulique selon l'une des revendications 1 à 7, **caractérisé en ce que** l'induit (14) est en contact et en appui avec l'électroaimant (13) piloté.

9. Support hydraulique selon l'une des revendications 1 à 8, **caractérisé en ce que** l'électroaimant (13) est agencé sur le côté de l'induit (14) détourné axialement de la cloison de séparation (8).

10. Support hydraulique selon l'une des revendications 1 à 9, **caractérisé en ce que** l'électroaimant (13) est susceptible d'être piloté au moyen d'une ligne électrique (17) qui traverse la partie portante (1).

11. Support hydraulique selon la revendication 5, **caractérisé en ce que** la paroi de séparation (8) est réalisée à la manière d'une cage à buses (18) et comprend deux plaques à buses agencées axialement voisines l'une de l'autre (19, 20), entre lesquelles est agencée une seconde membrane (21) en un matériau présentant l'élasticité du caoutchouc et capable d'osciller axialement en direction des oscillations imposées (6).
